# EUROPÄISCHE PATENTSCHRIFT

(11) **EP 3 794 951 B1**
(45) Veröffentlichungstag und Bekanntmachung des Hinweises auf die Patenterteilung: **03.01.2024**
(21) Anmeldenummer: 20187483.1
(22) Anmeldetag: 23.07.2020
(51) Int. Cl.: A23G 1/04, A23G 3/02, A23G 3/18, A23G 7/02

(54) **SÜSSWARENHERSTELLUNGSMASCHINE MIT KABELLOSER ENERGIEÜBERTRAGUNG IM MASSEBEREICH**
MACHINE FOR PRODUCING CONFECTIONERY ITEMS WITH CABLELESS ENERGY TRANSFER IN THE MASS HANDLING AREA
MACHINE DE FABRICATION DE CONFISERIES À TRANSFERT D'ÉNERGIE SANS FIL DANS LA ZONE DE MASSE

(30) Priorität: 19.09.2019 DE 102019125241
(43) Veröffentlichungstag der Anmeldung: 24.03.2021
(73) Patentinhaber: Sollich KG, 32105 Bad Salzuflen (DE)
(72) Erfinder: Bläsing, Rüdiger, 33613 Bielefeld (DE)
(74) Vertreter: REHBERG HÜPPE + PARTNER

(56) Entgegenhaltungen:
- EP-A1- 3 031 334
- DE-B3-102004 062 137

## Beschreibung

### TECHNISCHES GEBIET DER ERFINDUNG

Die Erfindung betrifft eine Süßwarenherstellungsmaschine, in der eine Süßwarenmasse verarbeitet wird.

Bei der Süßwarenherstellungsmaschine kann es sich insbesondere um eine Überziehmaschine, eine Temperiermaschine, einen Kühlkanal, eine Formmaschine, eine Gießmaschine oder eine Dekoriermaschine handeln. Bei der Süßwarenmasse kann es sich insbesondere um eine Schokolademasse, eine Karamellmasse oder Fondant oder eine andere Zuckermasse, Zuckerersatzstoffmasse oder Fettmasse handeln.

Mit der Süßwarenherstellungsmaschine wird die Süßwarenmasse für die Verwendung in einem Süßwarenprodukt vorbereitet oder zur Ausbildung des Süßwarenprodukts verarbeitet.

### STAND DER TECHNIK

Aus dem deutschen Patent DE 10 2004 062 137 B3 ist eine als Überziehmaschine ausgebildete Süßwarenherstellungsmaschine bekannt. Die Überziehmaschine weist einen Massebereich auf, in dem flüssige Süßwarenmasse verarbeitet wird. In dem Massebereich sind mehrere elektrische Verbraucher angeordnet. Zu diesen gehört ein verfahrbarer Wagen, der zur Reinigung der Überziehmaschine von innen dient. Der Reinigungswagen wird über eine elektronische Steuereinrichtung gesteuert und über eine elektrische Leitung mit elektrischer Energie versorgt.

Im Stand der Technik sind Süßwarenherstellungsmaschinen mit einem Massebereich, in dem eine flüssige Süßwarenmasse verarbeitet wird, allgemein bekannt. Ein Beispiel ist eine Überziehmaschine. Die Überziehmaschine weist ein umlaufend angetriebenes Gitterband auf, auf dem die mit Schokolademasse zu überziehenden Süßwarenprodukte durch den Innenraum der Überziehmaschine transportiert werden. Der Innenraum bildet auch den Massebereich. In dem Massebereich ist eine Hebeleiste angeordnet. Die Hebeleiste dient dazu, das Gitterband lokal begrenzt anzuheben. In der Hebeleiste ist ein elektrischer Verbraucher angeordnet. Bei dem elektrischen Verbraucher handelt es sich um eine Heizeinrichtung, die die Hebeleiste erwärmt. Dadurch wird verhindert, dass sich die flüssige Schokolademasse abkühlt, erstarrt und an der Hebeleiste aufbaut. Für die Energieversorgung der Heizeinrichtung weist die Hebeleiste endseitig eine Kabelverbindung mit Steckern und Buchsen auf.

Aus der deutschen Patentanmeldung DE 10 2008 053 200 A1 ist eine Vorrichtung zur Überwachung der Lagerung und des Transports von durch Umwelteinflüsse sich ändernden Gütern bekannt. Ein Energiespeicher wird kabellos mit elektrischer Energie versorgt.

Ein Transportwagen zum Transportieren von Formen in einer Fertigungsstraße für Süßwaren ist aus der europäischen Patentanmeldung EP 3 031 334 A1 bekannt. Der Transportwagen weist einen elektrischen Antrieb auf, der mittels einer kabellosen Energieübertragungseinheit mit einem Sender und einem Empfänger mit elektrischer Energie versorgt werden kann.

### AUFGABE DER ERFINDUNG

Der Erfindung liegt die Aufgabe zugrunde, eine Süßwarenherstellungsmaschine bereitzustellen, bei der im Massebereich angeordnete Verarbeitungselemente, die einen elektrischen Verbraucher aufweisen, einfacher gereinigt werden können.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft eine Süßwarenherstellungsmaschine mit einem Massebereich, in dem flüssige Süßwarenmasse verarbeitet wird. Die Süßwarenherstellungsmaschine weist einen elektrischen Verbraucher auf, der in dem Massebereich angeordnet ist. Die Süßwarenherstellungsmaschine weist weiterhin eine kabellose Energieübertragungseinheit mit einem Sender und einem Empfänger zum Versorgen des elektrischen Verbrauchers mit elektrischer Energie auf. Der Empfänger ist in dem Massebereich angeordnet.

Die aus anderen technischen Gebieten und insbesondere zum Laden von Akkumulatoren bekannte kabellose Energieübertragung wird nun erstmals für die Energieversorgung eines elektrischen Verbrauchers verwendet, der sich im Massebereich einer Süßwarenherstellungsmaschine befindet. Der Massebereich ist dabei der Innenraum der Süßwarenherstellungsmaschine, in dem die flüssige Süßwarenmasse verarbeitet wird. Es handelt sich also insbesondere nicht um das Äußere der Süßwarenherstellungsmaschine und auch nicht um eine Energieversorgung der gesamten Süßwarenherstellungsmaschine.

Unter einer "kabellosen" Energieübertragungseinheit wird in dieser Anmeldung eine Energieübertragungseinheit verstanden, bei der die elektrische Energie nicht entlang elektrischer Leitungen und auch nicht mittels elektrischer Kontakte vom Sender auf den Empfänger übertragen wird. In diesem Sinne kann die kabellose Energieübertragungseinheit also auch als "kontaktlose" oder "drahtlose" Energieübertragungseinheit bezeichnet werden.

Man kann die Energieübertragungseinheit auch als "berührungslose" Energieübertragungseinheit bezeichnen, wobei das "berührungslos" darauf abstellt, dass die eigentliche Energieübertragung nicht durch eine Berührung realisiert ist. Berührungslos bedeutet also nicht zwingend, dass sich Sender und Empfänger mit ihren äußeren Oberflächen nicht berühren dürfen. Sender und Empfänger sind aber galvanisch getrennt.

Sender und Empfänger sind nicht mittels Kabeln verbunden. Vorzugsweise ist der gesamte Massebereich der Süßwarenherstellungsmaschine kabellos. Dadurch können Sender und Empfänger relativ zueinander verdreht oder anders relativ zueinander bewegt werden, ohne dass die Gefahr der ungewollten Unterbrechung der Energieübertragung und von Beschädigungen besteht.

Bei der kabellosen Energieübertragungseinheit handelt es sich insbesondere um eine solche des Prinzips der sogenannten Nahfeldkopplung. Es kann sich dabei um eine induktive oder eine kapazitive Kopplung handeln. Bevorzugt ist eine induktive Nahfeldkopplung. Die Grundlagen der drahtlosen Energieübertragung sind für sich genommen aus dem Stand der Technik bekannt, so dass diesbezüglich auf den Artikel "Drahtlose Energieübertragung" aus WIKIPEDIA verwiesen und auf weitere diesbezügliche Erläuterungen verzichtet wird.

In den letzten Jahren wurden die an Süßwarenherstellungsmaschinen gestellten Reinheitsanforderungen erhöht. Dies gilt insbesondere bei einem gewissen Milchanteil in einer Milchschokolade. Die Reinigung einer Süßwarenherstellungsmaschine erfolgt oftmals mit Wasser, wodurch sich hygienische Probleme im Sinne des Entstehens von Keimen ergeben können.

Durch die neue kabellose Energieübertragungseinheit entfallen nun in diesem in hygienischer Sicht sensiblen Massebereich der Süßwarenherstellungsmaschine Kabel, Buchsen und Stecker. Solche Kabel, Buchsen und Stecker, auf die ungewollt flüssige Süßwarenmasse gelangt, sind nur schwierig zu reinigen. Dieses Problem ist durch den Entfall von Kabeln, Steckern und Buchsen wirksam gelöst.

Durch den Betrieb der kabellosen Energieübertragungseinheit ergibt sich eine Erwärmung von Sender und Empfänger. Die Erwärmung des Empfängers hat dabei einen positiven Nutzen, indem dort vorhandene Süßwarenmasse erwärmt und somit ein ungewollter Aufbau der Süßwarenmasse in diesem Bereich verhindert oder zumindest reduziert wird. Auch die Erwärmung des Senders hat einen positiven Nutzen, indem hierdurch die Seitenwandung, an der der Sender angeordnet ist, erwärmt wird.

Bei dem elektrischen Verbraucher kann es sich um eine Heizeinrichtung handeln. Derartige Heizeinrichtungen dienen zum Beheizen von Verarbeitungselementen der Süßwarenherstellungsmaschine, die mit der flüssigen Süßwarenmasse in Kontakt kommen. Durch die Beheizung wird verhindert, dass sich die Süßwarenmasse ungewollt stark abkühlt erstarrt und an dieser Stelle aufbaut. Bei dem elektrischen Verbraucher kann es sich aber auch um einen Motor oder einen Sensor handeln, der in dem Massebereich angeordnet ist.

Der Empfänger der kabellosen Energieübertragungseinheit ist insbesondere an dem Verarbeitungselement angeordnet. Wenn das Verarbeitungselement werkzeuglos demontierbar in der Süßwarenherstellungsmaschine angeordnet ist, ergibt sich dadurch ein besonders einfacher Einbau und Ausbau des Verarbeitungselements in der Süßwarenherstellungsmaschine. Es müssen keine Kabelverbindungen hergestellt bzw. getrennt und auch keine Werkzeuge eingesetzt werden. Hierdurch lässt sich das Verarbeitungselement besonders schnell und effizient entfernen und außerhalb der Maschine reinigen.

Das Verarbeitungselement kann ein Abstreifer oder eine Leiste, insbesondere eine Hebeleiste, sein. Bei dem Abstreifer kann es sich beispielsweise um den Abstreifer einer Leckwelle einer Überziehmaschine handeln. Der Abstreifer nimmt überschüssige flüssige Süßwarenmasse von der Leckwelle ab. Der Abstreifer der Leckwelle wird beheizt, damit sich die Süßwarenmasse dort nicht aufbaut. Die Leckwelle selbst wird nicht beheizt.

Ein anderes geeignetes Anwendungsbeispiel ist eine Hebeleiste einer solchen Überziehmaschine. Die Hebeleiste dient dazu, das Gitterband lokal begrenzt anzuheben. In der Hebeleiste ist ein elektrischer Verbraucher angeordnet. Bei dem elektrischen Verbraucher handelt es sich um eine Heizeinrichtung, die die Hebeleiste erwärmt. Dadurch wird verhindert, dass sich die flüssige Schokolademasse abkühlt, erstarrt und an der Hebeleiste aufbaut.

Der Sender und der Empfänger können jeweils eine Energieübertragungsoberfläche aus einem thermoplastischen Kunststoff und insbesondere aus einem Polyaryletherketon, insbesondere Polyetheretherketon (PEEK), aufweisen. Derartige Kunststoffe sind für die eingesetzten elektromagnetischen Wellen durchlässig und erlauben somit das Senden und Empfangen der elektromagnetischen Signale zwischen Sender und Empfänger. Solche Kunststoffe besitzen zudem eine Lebensmittelzulassung und sind daher für den Einsatz in dem sensiblen Massebereich einer Süßwarenherstellungsmaschine zugelassen.

Die Energieübertragungsoberflächen können eben ausgebildet und parallel zueinander angeordnet sein. In dieser Weise ergibt sich ein einfacher Aufbau und eine gute Reinigbarkeit von Sender und Empfänger. Zudem ist ein hoher Wirkungsgrad der Energieübertragung sichergestellt. Des Weiteren ist die Montage und Demontage des Verarbeitungselements, an dem sich die Energieübertragungsoberfläche des Empfängers befindet, besonders einfach möglich. Es wäre aber auch möglich, eine andere Geometrie und Anordnung der Energieübertragungsoberflächen zu wählen.

Zwischen den Energieübertragungsoberflächen kann ein Spalt, insbesondere ein Spalt zwischen etwa 0,1 mm und 10 mm, insbesondere zwischen etwa 0,1 mm und 5 mm, insbesondere zwischen etwa 0,1 mm und 0,2 mm, existieren. Der Spalt ist so gewählt, dass der gewünschte Wirkungsgrad der Energieübertragungseinheit erreicht wird. Dieser Wirkungsgrad sinkt bei einer Vergrößerung des Spalts. Andererseits kann eine Vergrößerung des Spalts dazu führen, dass sich in dem Spalt weniger Süßwarenmasse festsetzt. Es ist aber auch möglich, dass kein Spalt vorhanden ist.

Die Energieübertragungseinheit kann eine Leistung von zwischen etwa 18 W und 200 W besitzen. Die Leistung kann insbesondere etwa zwischen 18 W und 80 W, insbesondere zwischen etwa 20 W und 65 W und insbesondere zwischen etwa 40 W und 60 W liegen. Ein solcher Leistungsbereich ist für die Energieversorgung der in Rede stehenden Verarbeitungselemente der Süßwarenherstellungsmaschine geeignet und lässt sich gut technisch mit der Energieübertragungseinheit realisieren.

Die Süßwarenherstellungsmaschine kann zwei gegenüberliegende Seitenwandungen, insbesondere aus Metall, aufweisen, die einen Innenraum der Süßwarenherstellungsmaschine mit definieren, wobei sich der Massebereich in dem Innenraum befindet. In einer der Seitenwandungen kann eine Koppelöffnung angeordnet sein, durch die sich ein Teil der kabellosen Energieübertragungseinheit erstreckt. In dieser Weise wird die Übertragung zwischen Sender und Empfänger gewährleistet, obwohl sich der Sender außen an der Süßwarenherstellungsmaschine und der Empfänger im Innenraum der Süßwarenherstellungsmaschine befindet und die Seitenwandung aus Metall besteht.

Bei der Süßwarenherstellungsmaschine kann es sich um eine Überziehmaschine, eine Temperiermaschine, einen Kühlkanal, eine Formmaschine, eine Gießmaschine oder eine Dekoriermaschine handeln.

Die Energieübertragung erfolgt mittels elektromagnetischer Wellen. Die elektromagnetischen Wellen können insbesondere eine Frequenz zwischen etwa 100 kHz und 200 kHz, insbesondere zwischen etwa 120 kHz und 180 kHz, besitzen.

Wenn es sich um eine induktive Energieübertragungseinheit handelt, ist der Sender als Senderspule und der Empfänger als Empfängerspule ausgebildet. Die Spulen sind mit einem geeigneten Material ummantelt.

Der Durchmesser der Spulen richtet sich nach der benötigten Leistung. Für einen Leistungsbereich von zwischen etwa 20 W und 100 W sind Durchmesser von etwa zwischen 40 mm und 90 mm erforderlich. Die Dicke von Sender um Empfänger kann jeweils etwa 10 mm betragen.

Ein vertikaler und/oder horizontaler Versatz von etwa 5 mm zwischen Sender und Empfänger stellt kein Problem bei der Übertragung dar.

Die Leistung des Senders kann an die benötigte Leistung des elektrischen Verbrauchers anpassbar, insbesondere geregelt anpassbar, sein. Bei einer Heizeinrichtung ist dies der Heizwiderstand. Damit kann die Zieltemperatur eingestellt werden. Es ist beispielsweise möglich, unterschiedliche Zieltemperaturen für den Betrieb der Maschine tagsüber und für außerhalb der Betriebszeiten nachts einzustellen. Des Weiteren ist es möglich, hiermit eine Anpassung an die jeweilige Breite des Innenraums der Maschine und der entsprechenden Länge des Verarbeitungselements vorzunehmen.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Energieübertragungseinheit die Rede ist, ist dies so zu verstehen, dass genau eine Energieübertragungseinheit, zwei Energieübertragungseinheiten oder mehr Energieübertragungseinheiten vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine perspektivische Ansicht eines Teils einer ersten Seite eines Massebereichs einer beispielhaften Ausführungsform einer Süßwarenherstellungsmaschine aus einer ersten Blickrichtung.
- **Fig. 2**: zeigt eine perspektivische Ansicht eines Teils einer gegenüberliegenden zweiten Seite des Massebereichs der Süßwarenherstellungsmaschine gemäß Fig. 1 aus einer entgegengesetzten zweiten Blickrichtung.
- **Fig. 3**: zeigt eine geschnittene perspektivische Ansicht des Massebereichs der Süßwarenherstellungsmaschine gemäß Fig. 2 mit einer Leckwelle und einem zugehörigen Abstreifer.
- **Fig. 4**: zeigt eine Schnittansicht des Massebereichs der Süßwarenherstellungsmaschine gemäß Fig. 2 mit der Leckwelle und dem zugehörigen Abstreifer.
- **Fig. 5**: zeigt eine ähnliche Ansicht wie Fig. 4, aber mit einer Energieübertragungseinheit mit einem vergrößerten Spalt zwischen Sender und Empfänger.
- **Fig. 6**: zeigt eine geschnittene perspektivische Ansicht des Massebereichs der Süßwarenherstellungsmaschine gemäß Fig. 2 mit einer Hebeleiste.
- **Fig. 7**: zeigt eine Schnittansicht des Massebereichs der Süßwarenherstellungsmaschine gemäß Fig. 2 mit der Hebeleiste.
- **Fig. 8**: zeigt eine ähnliche Ansicht wie Fig. 7, aber mit einer Energieübertragungseinheit mit einem vergrößerten Spalt zwischen Sender und Empfänger.

### FIGURENBESCHREIBUNG

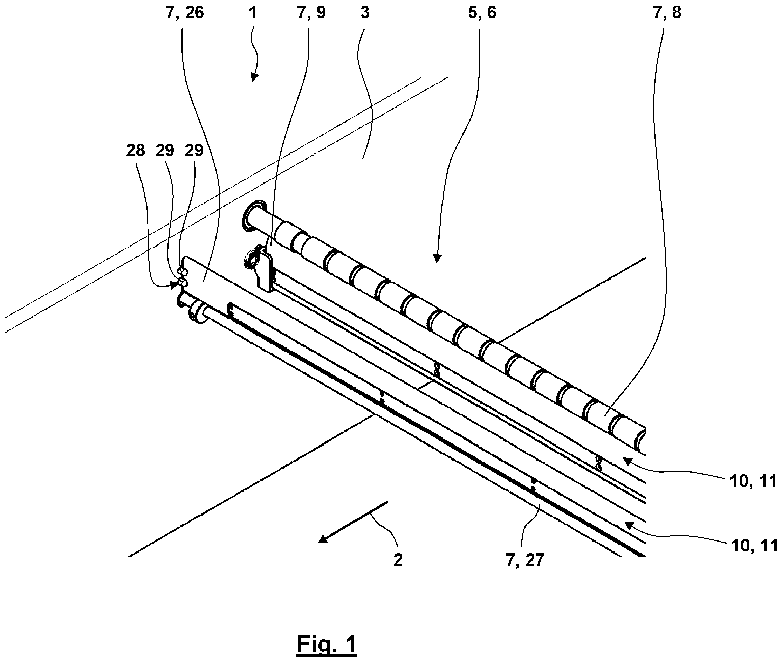

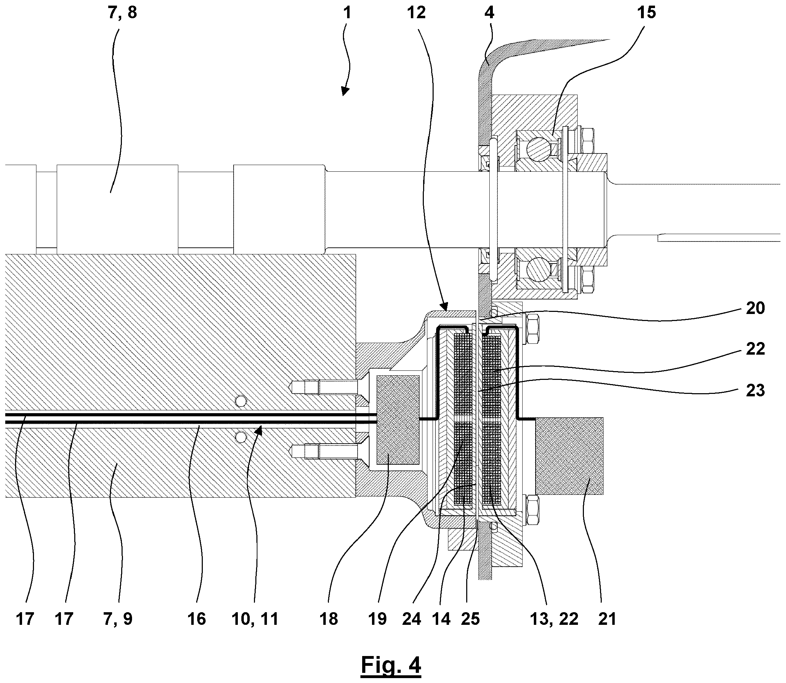

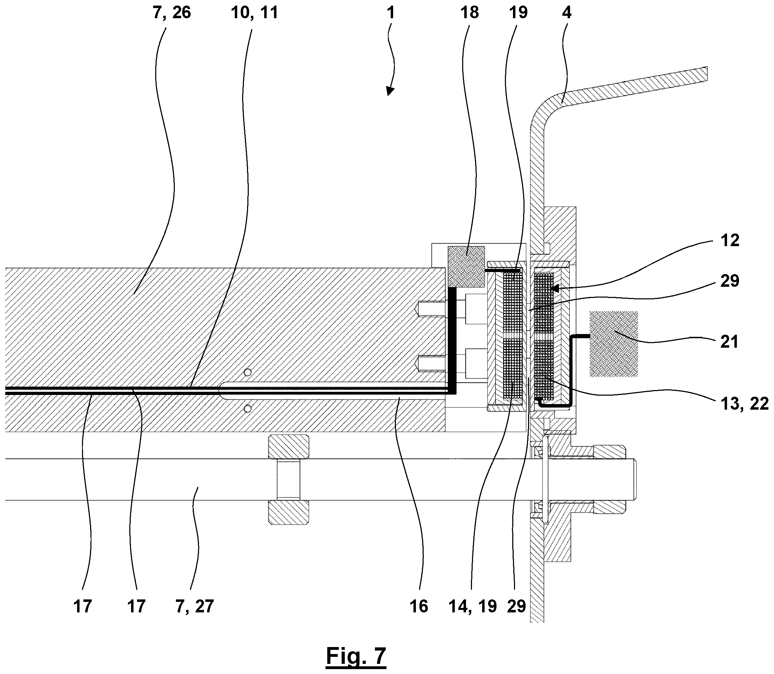

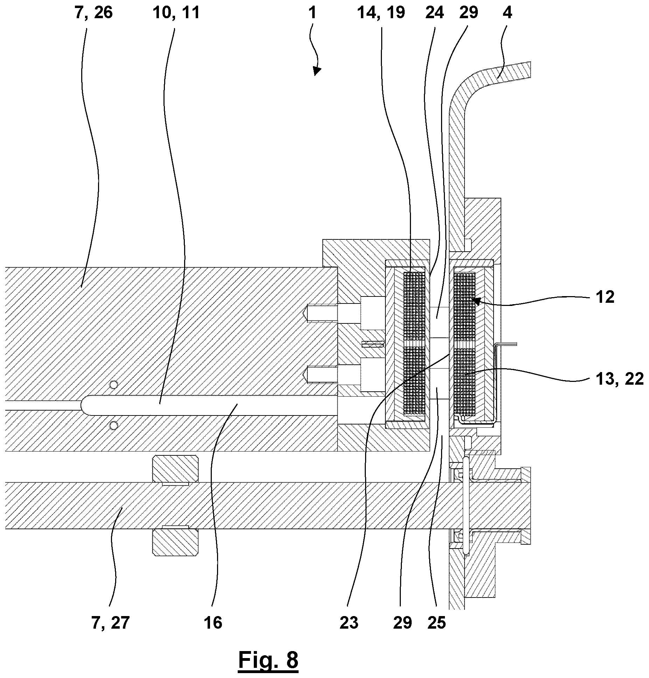

**Fig. 1-8** zeigen verschiedene Ansichten von Ausführungsbeispielen einer neuen Süßwarenherstellungsmaschine 1. Die Zeichnungen zeigen jeweils nur einen Teil der Süßwarenherstellungsmaschine 1, was anhand der entsprechend endenden Linien (ohne Abbruchlinien) ersichtlich ist.

Bei dem in den Zeichnungen dargestellten Ausführungsbeispiel der Süßwarenherstellungsmaschine 1 handelt es sich bei der um eine Überziehmaschine. Es könnte sich aber auch um eine andere Süßwarenherstellungsmaschine 1 handeln.

In einer solchen Überziehmaschine werden Süßwarenartikel mit einer Schokolademasse oder einer anderen Süßwarenmasse überzogen. Die Süßwarenartikel liegen dabei auf einem Gitterband (nicht dargestellt) auf, welches gemäß einem Förderrichtungssinn 2 durch die Süßwarenherstellungsmaschine 1 transportiert werden. Da diese Aspekte einer Überziehmaschine dem Fachmann für sich genommen geläufig sind, wird auf eine weitere Beschreibung hierin verzichtet.

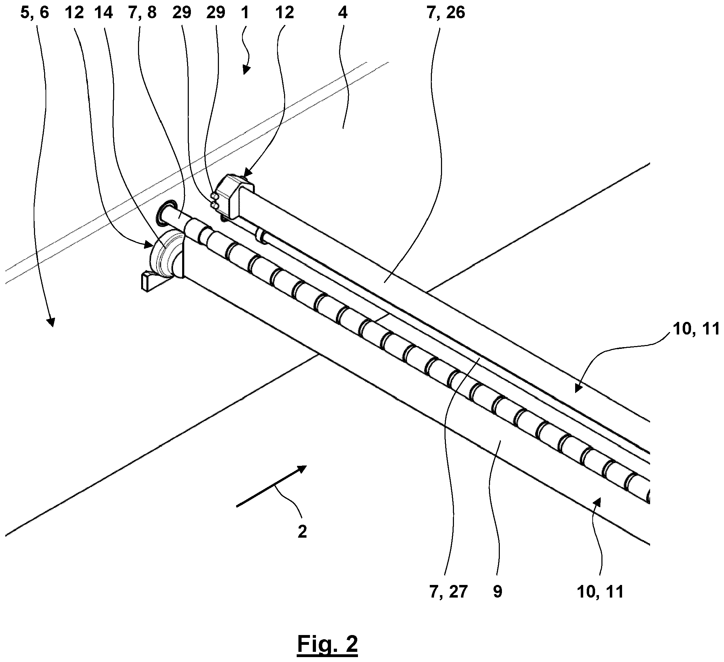

Fig. 1 und Fig. 2 zeigen einen Teil der Süßwarenherstellungsmaschine 1 aus entgegengesetzten Blickrichtungen. Dies ist anhand der Pfeile nachvollziehbar, die den Förderrichtungssinn 2 bezeichnen. Die Süßwarenherstellungsmaschine 1 weist eine erste Seitenwandung 3 (siehe Fig. 1) und eine gegenüberliegende zweite Seitenwandung 4 (siehe Fig. 2) auf. Zwischen den Seitenwandungen 3, 4 ist ein Innenraum 5 gebildet. In diesem Innenraum 5 wird flüssige Süßwarenmasse verarbeitet. Daher wird dieser Bereich als Massebereich 6 bezeichnet.

Zwischen den Seitenwandungen 3, 4 erstrecken sich verschiedene Verarbeitungselemente 7 der Süßwarenherstellungsmaschine 1.

Bei einem der Verarbeitungselemente 7 handelt es sich um eine Leckwelle 8. Die Leckwelle 8 arbeitet mit einem weiteren Verarbeitungselement 7 zusammen, das als Abstreifer 9 ausgebildet ist. Der Abstreifer 9 ist unterhalb der Leckwelle 8 angeordnet und dient dazu, die sich auf der Leckwelle 8 ansammelnde flüssige Schokolademasse von dieser abzustreifen. Der Abstreifer 9 ist beheizt und weist hierfür einen elektrischen Verbraucher 10 auf, der als Heizeinrichtung 11 ausgebildet ist. Die Heizeinrichtung 11 erstreckt sich innen in dem Abstreifer 9 und ist daher in den Abbildungen der Fig. 1 und 2 nicht weiter sichtbar. Die Leckwelle 8 ist nicht beheizt.

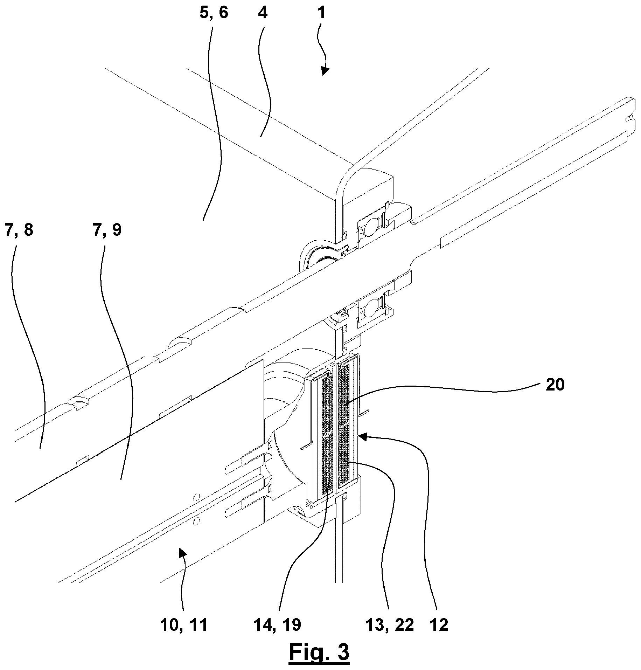

Über das eine Ende des Abstreifers 9 (siehe Fig. 2) wird dessen Heizeinrichtung 11 mit elektrischer Energie versorgt. Hierfür dient eine kabellose Energieübertragungseinheit 12 mit einem Sender 13 (siehe Fig. 3-5) und einem Empfänger 14. Der Empfänger 14 ist im Bereich der Seitenwandung 4 und somit im Massebereich 6 angeordnet.

Der Abstreifer 9 ist werkzeuglos demontierbar an der Seitenwandung 4 der Süßwarenherstellungsmaschine 1 angeordnet. Hierdurch und durch die nicht vorhandenen Kabel, Buchsen und Stecker für die Energieversorgung des Abstreifers 9 lässt sich dieser besonders einfach und schnell für eine Reinigung aus der Süßwarenherstellungsmaschine 1 entfernen und anschließend wieder einsetzen.

Die weiteren Details der Leckwelle 8 und insbesondere der kabellosen Energieübertragungseinheit 12 des Abstreifers 9 sind in den Fig. 3-5 dargestellt.

Die Leckwelle 8 ist mittels eines Lagers 15 drehbar gelagert.

Der Abstreifer 9 weist innen einen Heizkanal 16 auf, durch den Heizdrähte 17 geführt sind. Die Heizdrähte 17 sind mit einer Empfängerelektronik 18 des Empfängers 14 verbunden. Die Empfängerelektronik 18 wiederum ist mit einer Empfängerkoppelspule 19 verbunden. In dieser Weise wird der Empfänger 14 gebildet. Der Empfänger 14 kommuniziert mit dem Sender 13. Hierfür ist in der Seitenwandung 4 eine Koppelöffnung 20 vorhanden. In diese Koppelöffnung 20 ist ein Teil des Senders 13 eingesetzt, so dass die Koppelöffnung 20 durch den Sender 13 verschlossen wird. Der Sender 13 weist eine Senderelektronik 21 und eine Senderkoppelspule 22 auf.

In dieser Weise wird durch den Sender 13 drahtlos durch die Koppelöffnung 20 hindurch mittels elektromagnetischer Wellen elektrische Energie auf den Empfänger 14 übertragen. Mittels der Empfängerelektronik 18 wird dann die Heizeinrichtung 11 so betrieben, dass die gewünschte Erwärmung des Abstreifers 9 erzielt wird.

Die Empfängerkoppelspule 19 und die Senderkoppelspule 20 sind jeweils mit einem geeigneten Material ummantelt, so dass sie galvanisch getrennt sind. Bei dem Material handelt es sich insbesondere um PEEK oder einen anderen geeigneten thermoplastischen Kunststoff. Hierdurch wird eine erste Energieübertragungsoberfläche 23 an dem Sender 13 und eine zweite Energieübertragungsoberfläche 24 an dem Empfänger 14 gebildet. Zwischen den Energieübertragungsoberflächen 23, 24 ist ein Spalt 25 vorhanden.

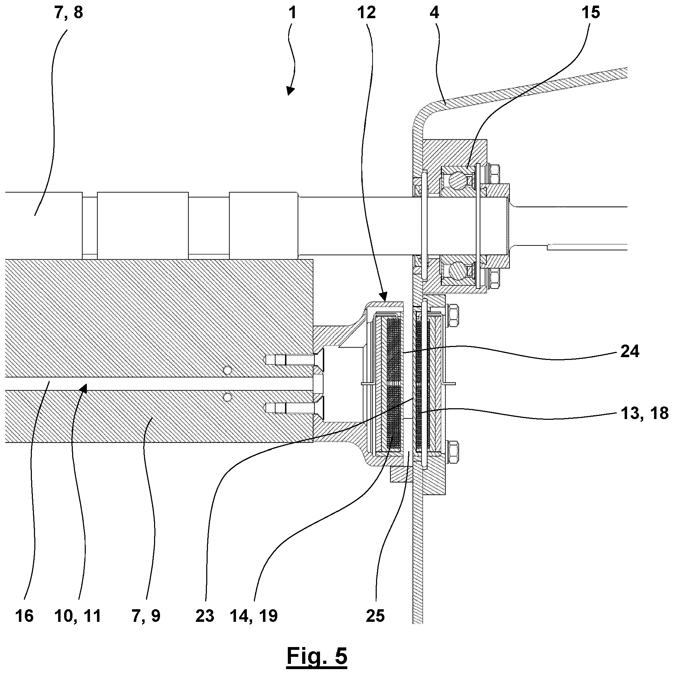

Dieser Spalt ist in der in Fig. 5 dargestellten Ausführungsform der kabellosen Energieübertragungseinheit 12 größer und daher besser erkennbar. Aus Gründen der Übersichtlichkeit wurde hier die Heizeinrichtung 11 nicht dargestellt. Auch die Senderelektronik und die Empfängerelektronik wurden weggelassen. Es versteht sich, dass diese Elemente aber dennoch vorhanden sind.

In Fig. 1 und 2 sind noch weitere Verarbeitungselemente 7 der Süßwarenherstellungsmaschine 1 angeordnet. Es handelt sich dabei um eine Gitterhebeleiste 26 und eine Höhenverstelleinrichtung 27.

Mittels der Gitterhebeleiste 26 wird das umlaufend angetriebene Gitterband (nicht dargestellt) räumlich begrenzt angehoben, um das Abfließen der überschüssigen flüssigen Süßwarenmasse vom Gitterband zu unterstützen. Die Gitterhebeleiste 26 liegt im Förderrichtungssinn 2 gesehen stromabwärts der Leckwelle 8. Eine andere Anordnung wäre aber ebenfalls möglich.

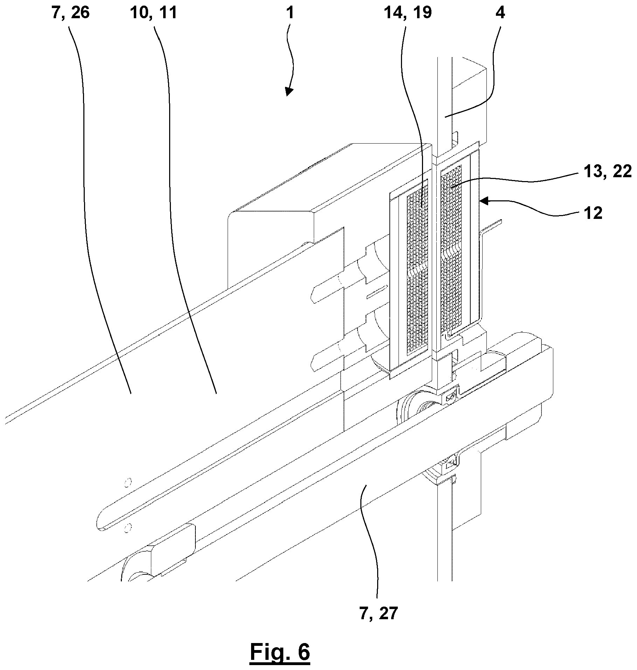

Die Details der Gitterhebeleiste 26 sind in den Fig. 6-8 gut erkennbar dargestellt. Mittels der Höhenverstelleinrichtung 27 kann die vertikale Position der Gitterhebeleiste 26 und somit deren Relativlage zum Gitterband eingestellt werden. Dabei wird die Gitterhebeleiste 26 von einer Führungseinrichtung 28 geführt. Im vorliegenden Fall handelt es sich um einzelne beabstandete Führungselemente 29. Es könnte sich aber auch um durchgehende Führungsleisten oder dergleichen handeln.

Die Gitterhebeleiste 26 weist ebenfalls eine Heizeinrichtung 11 mit dem Heizkanal 16 und den Heizdrähten 17 auf. Diese sind mit der Empfängerelektronik 18 verbunden. Diese ist wiederum mit der Empfängerkoppelspule 19 verbunden. In dieser Weise wird der Empfänger 14 gebildet. Der Empfänger 14 kommuniziert mit dem Sender 13. Hierfür ist in der Seitenwandung 4 eine weitere Koppelöffnung 20 vorhanden. In diese Koppelöffnung 20 ist ein Teil des Senders 13 eingesetzt, so dass die Koppelöffnung 20 durch den Sender 13 verschlossen wird. Der Sender 13 weist die Senderelektronik 21 und die Senderkoppelspule 22 auf.

### BEZUGSZEICHENLISTE

- 1: Süßwarenherstellungsmaschine
- 2: Förderrichtungssinn
- 3: Seitenwandung
- 4: Seitenwandung
- 5: Innenraum
- 6: Massebereich
- 7: Verarbeitungselement
- 8: Leckwelle
- 9: Abstreifer
- 10: elektrischer Verbraucher
- 11: Heizeinrichtung
- 12: kabellose Energieübertragungseinheit
- 13: Sender
- 14: Empfänger
- 15: Lager
- 16: Heizkanal
- 17: Heizdraht
- 18: Empfängerelektronik
- 19: Empfängerkoppelspule
- 20: Koppelöffnung
- 21: Senderelektronik
- 22: Senderkoppelspule
- 23: erste Energieübertragungsoberfläche
- 24: zweite Energieübertragungsoberfläche
- 25: Spalt
- 26: Gitterhebeleiste
- 27: Höhenverstelleinrichtung
- 28: Führungseinrichtung
- 29: Führungselement

## Patentansprüche

1. Süßwarenherstellungsmaschine (1), mit
einem Massebereich (6), in dem flüssige Süßwarenmasse verarbeitet wird,
einem elektrischen Verbraucher (10), der in dem Massebereich (6) angeordnet ist, wobei der elektrische Verbraucher (10) in einem Verarbeitungselement der Süßwarenherstellungsmaschine (1) angeordnet ist, das mit der flüssigen Süßwarenmasse in Kontakt kommt, **gekennzeichnet durch**
eine kabellose Energieübertragungseinheit (12) mit einem Sender (13) und einem Empfänger (14) zum Versorgen des elektrischen Verbrauchers (10) mit elektrischer Energie, wobei der Empfänger (14) in dem Massebereich (6) angeordnet ist.

2. Süßwarenherstellungsmaschine (1) nach Anspruch 1, **dadurch gekennzeichnet, dass** der elektrische Verbraucher (10) eine Heizeinrichtung (11) ist.

3. Süßwarenherstellungsmaschine (1) nach Anspruch 1 oder 2, **dadurch gekennzeichnet, dass** der Empfänger (14) an dem Verarbeitungselement (7) angeordnet ist.

4. Süßwarenherstellungsmaschine (1) nach Anspruch 3, **dadurch gekennzeichnet, dass** das Verarbeitungselement (7) werkzeuglos demontierbar in der Süßwarenherstellungsmaschine (1) angeordnet ist.

5. Süßwarenherstellungsmaschine (1) nach mindestens einem der vorhergehenden Ansprüche, **dadurch gekennzeichnet, dass** der Sender (13) eine erste Energieübertragungsoberfläche (23) und der Empfänger (14) eine zweite Energieübertragungsoberfläche (24) aus einem thermoplastischen Kunststoff, insbesondere einem Polyaryletherketon, insbesondere Polyetheretherketon (PEEK), aufweist.

6. Süßwarenherstellungsmaschine (1) nach Anspruch 5, **dadurch gekennzeichnet, dass** die erste Energieübertragungsoberfläche (23) und die zweite Energieübertragungsoberfläche (24) eben ausgebildet und parallel zueinander angeordnet sind.

7. Süßwarenherstellungsmaschine (1) nach Anspruch 6, **dadurch gekennzeichnet, dass** zwischen der ersten Energieübertragungsoberfläche (23) und der zweiten Energieübertragungsoberfläche (24) ein Spalt (25), insbesondere ein Spalt (25) zwischen 1 mm und 10 mm, existiert.

8. Süßwarenherstellungsmaschine (1) nach mindestens einem der vorhergehenden Ansprüche, **dadurch gekennzeichnet, dass** die kabellose Energieübertragungseinheit (12) eine Leistung von zwischen 18 W und 200 W besitzt.

9. Süßwarenherstellungsmaschine (1) nach mindestens einem der Ansprüche 1 bis 8, **dadurch gekennzeichnet, dass** das Verarbeitungselement (7) ein Abstreifer (9) oder eine Leiste, insbesondere eine Hebeleiste (26), ist.

10. Süßwarenherstellungsmaschine (1) nach mindestens einem der vorhergehenden Ansprüche, **dadurch gekennzeichnet, dass** die Süßwarenherstellungsmaschine (1) weiterhin zwei gegenüberliegende Seitenwandungen (3, 4) aufweist, die einen Innenraum (5) der Süßwarenherstellungsmaschine (1) mit definieren, wobei sich der Massebereich (6) in dem Innenraum (5) befindet.

11. Süßwarenherstellungsmaschine (1) nach Anspruch 10, **dadurch gekennzeichnet, dass** in einer der Seitenwandungen (3, 4) eine Koppelöffnung (20) angeordnet ist, durch die sich ein Teil der kabellosen Energieübertragungseinheit (12) erstreckt.

12. Süßwarenherstellungsmaschine (1) nach mindestens einem der vorhergehenden Ansprüche, **dadurch gekennzeichnet, dass** die Süßwarenherstellungsmaschine (1) eine Überziehmaschine, eine Temperiermaschine, ein Kühlkanal, eine Formmaschine, eine Gießmaschine oder eine Dekoriermaschine ist.

## Claims

1. Confectionary item producing machine (1) comprising
a mass area (6) in which liquid confectionary mass is processed,
an electric consumer load (10) which is arranged in the mass area (6),
wherein the electric consumer load (10) is arranged in a processing element of the confectionary item producing machine (1) that gets into contact with the liquid confectionary mass, **characterized by**
a cable-less energy transfer unit (12) comprising a transmitter (13) and a receiver (14) for suppling the electric consumer load (10) with electric energy, wherein the receiver (14) is arranged in the mass area (6).

2. Confectionary item producing machine (1) of claim 1, **characterized in that** the electric consumer load (10) is a heating device (11).

3. Confectionary item producing machine (1) of claim 1 or 2, **characterized in that** the receiver (14) is arranged at the processing element (7).

4. Confectionary item producing machine (1) of claim 3, **characterized in that** the processing element (7) is arranged in the confectionary item producing machine (1) in a tool-free demountable way.

5. Confectionary item producing machine (1) of at least one of the preceding claims, **characterized in that** the transmitter (13) comprises a first energy transfer surface (23) and the receiver (14) comprises a second energy transfer surface (24) made of a thermoplastic, particularly a polyaryletherketone, particularly polyetheretherketone (PEEK).

6. Confectionary item producing machine (1) of claim 5, **characterized in that** the first energy transfer surface (23) and the second energy transfer surface (24) are flat and arranged in parallel with respect to one another.

7. Confectionary item producing machine (1) of claim 6, **characterized in that** a gap (25), particularly a gap between 1 mm and 10 mm, exists between the first energy transfer surface (23) and the second energy transfer surface (24).

8. Confectionary item producing machine (1) of at least of one of the preceding claims, **characterized in that** the cable-less energy transfer unit (12) has a power between 18 W and 200 W.

9. Confectionary item producing machine (1) of at least of one of the claims 1 to 8, **characterized in that** the processing element (7) is a scraper (9) or a bar, particularly a raising bar (26).

10. Confectionary item producing machine (1) of at least one of the preceding claims, **characterized in that** the confectionary item producing machine (1) further comprises two opposing sidewalls (3, 4) which contribute to defining an interior space (5) of the confectionary item producing machine (1), wherein the mass area (6) is located in the interior space (5).

11. Confectionary item producing machine (1) of claim 10, **characterized in that** a coupling opening (20) through which a part of the cable-less energy transfer unit (12) extends is arranged in one of the sidewalls (3, 4).

12. Confectionary item producing machine (1) of at least one of the preceding claims, **characterized in that** the confectionary item producing machine (1) is coating machine, a tempering machine, a cooling tunnel, a forming machine, a molding machine or a decorating machine.

## Revendications

1. Machine de fabrication de confiseries (1) avec
une zone de masse (6), dans laquelle une masse de confiserie liquide est traitée,
un consommateur électrique (10), qui est disposé dans la zone de masse (6), dans lequel le consommateur électrique (10) est disposé dans élément de traitement de la machine de fabrication de confiseries (1), qui entre en contact avec masse de confiserie liquide,
**caractérisée par**
une unité de transmission d'énergie sans câble (12) avec un émetteur (13) et un récepteur (14), pour l'alimentation du consommateur électrique (10) en énergie électrique, dans lequel le récepteur (14) est disposé dans la zone de masse (6).

2. Machine de fabrication de confiseries (1) selon la revendication 1, **caractérisée en ce que** le consommateur électrique (10) est un dispositif de chauffage (11).

3. Machine de fabrication de confiseries (1) selon la revendication 1 ou 2, **caractérisée en ce que** le récepteur (14) est disposé sur l'élément de traitement (7).

4. Machine de fabrication de confiseries (1) selon la revendication 3, **caractérisée en ce que** l'élément de traitement (7) est disposé de manière démontable sans outil dans la machine de fabrication de confiseries (1).

5. Machine de fabrication de confiseries (1) selon au moins l'une des revendications précédentes, **caractérisée en ce que** l'émetteur (13) présente une première surface de transmission d'énergie (23) et le récepteur (14) présente une deuxième surface de transmission d'énergie (24) en matière plastique thermoplastique, plus particulièrement un polyaryléthercétone, plus particulièrement un polyétheréthercétone (PEEK).

6. Machine de fabrication de confiseries (1) selon la revendication 5, **caractérisée en ce que** la première surface de transmission d'énergie (23) et la deuxième surface de transmission d'énergie (24) sont planes et sont disposées de manière parallèle entre elles.

7. Machine de fabrication de confiseries (1) selon la revendication 6, **caractérisée en ce que**, entre la première surface de transmission d'énergie (23) et la deuxième surface de transmission d'énergie (24), il existe un interstice (25), de préférence un interstice (25) entre 1 mm et 10 mm.

8. Machine de fabrication de confiseries (1) selon au moins l'une des revendications précédentes, **caractérisée en ce que** l'unité de transmission d'énergie dans câble (12) présente une puissance entre 18 W et 200 W.

9. Machine de fabrication de confiseries (1) selon au moins l'une des revendications 1 à 8, **caractérisée en ce que** l'élément de traitement (7) est un racloir (9) ou une barre, plus particulièrement une barre de levage (26).

10. Machine de fabrication de confiseries (1) selon au moins l'une des revendications précédentes, **caractérisée en ce que** la machine de fabrication de confiseries (1) comprend en outre deux parois latérales opposées (3, 4) qui délimitent un espace interne (5) de la machine de fabrication de confiseries (1), dans lequel la zone de masse (6) se trouve dans l'espace interne (5).

11. Machine de fabrication de confiseries (1) selon la revendication 10, **caractérisée en ce que**, dans une des parois latérales (3, 4), est disposée une ouverture de couplage (20) à travers laquelle s'étend une partie de l'unité de transmission d'énergie sans câble (12).

12. Machine de fabrication de confiseries (1) selon au moins l'une des revendications précédentes, **caractérisée en ce que** la machine de fabrication de confiseries (1) est une machine d'enrobage, une machine à régulation de température, un canal de refroidissement, une machine de formage, une machine de moulage ou une machine de décoration.
